# EUROPÄISCHE PATENTANMELDUNG

(11) **EP 1 275 748 A2**
(43) Veröffentlichungstag der Anmeldung: **15.01.2003**
(21) Anmeldenummer: 02405527.9
(22) Anmeldetag: 25.06.2002
(51) Int. Cl.: C23C 4/02, C23C 4/08, C23C 28/00

(54) **Hochtemperaturbeständiger Schutzüberzug mit eingebetteten lokalen Erhebungen sowie Verfahren zur Herstellung des Schutzüberzuges**

(30) Priorität: 13.07.2001 CH 13042001
(71) Anmelder: ALSTOM (Switzerland) Ltd, 5401 Baden (CH)
(72) Erfinder: Fried, Reinhard, 5415 Nussbaumen (CH); Goecmen, Alkman, 5405 Daettwil (CH); Khan, Abdus S., 5408 Ennetbaden (CH)

(57) **Zusammenfassung**

Beschrieben wird ein hochtemperaturbeständiger Schutzüberzug über eine metallische Substratoberfläche (1), der wenigstens eine Materialschicht (4) bestehend aus MCrAIY aufweist, wobei M wenigstens eines der Elemente aus einer aus Fe, Co und Ni bestehenden Stoffgruppe ist. Ferner wird ein diesbezügliches Herstellverfahren beschrieben.

Die Erfindung zeichnet sich dadurch aus, dass unmittelbar auf der Substratoberfläche (1) oder mittelbar durch wenigstens eine Zwischenschicht (2) von der Substratoberfläche (1) getrennt auf dieser flächig verteilt eine Vielzahl lokaler Erhebungen, sogenannte Rivets (3), vorgesehen sind, die mit der Substratoberfläche (1) oder der Zwischenschicht (2) fest verfügt sind,
dass wenigstens eine Materialschicht (4) bestehend aus MCrAIY auf der Substratoberfläche (1) bzw. Zwischenschicht (2) derart abgeschieden ist, das die Materialschicht (4) bestehend aus MCrAIY die Rivets (3) vollständig umgibt, Bereiche zwischen benachbarten Rivets (3) vollständig ausfüllt und die Rivets (3) überragt.

## Beschreibung

### Technisches Gebiet

Die Erfindung bezieht sich auf einen hochtemperaturbeständigen Schutzüberzug über eine metallische Substratoberfläche, der wenigstens eine Materialschicht bestehend aus MCrAIY aufweist, wobei M wenigstens eines der Elemente aus einer aus Fe, Co und Ni bestehenden Stoffgruppe ist. Ferner wird ein Verfahren zur Herstellung eines derartigen Schutzüberzuges beschrieben.

### Stand der Technik

Hochtemperaturbeständige Schutzüberzüge der vorstehend genannten Gattung finden bevorzugten Einsatz auf dem Gebiet der Gasturbinentechnik, so beispielsweise in Brennkammern, an Flügelprofilteilen sowie in Form äußerer Luftdichtungen. Insbesondere die Konstruktion von äußeren Luftdichtungen hat im Stand der Technik beträchtliche Aufmerksamkeit erfahren und es werden ständig neue, wirksame Ausführungsformen derartiger Dichtungssysteme gesucht. In einem Axialgasturbinentriebwerk erstrecken sich Kränze von Laufschaufeln sowohl in dem Verdichtungs- als auch in dem Turbinenabschnitt der Gasturbinenanlage an der Rotoranordnung radial nach außen über dem Strömungsweg des Arbeitsgases. Eine äußere Luftdichtung, die an der Statoranordnung befestigt ist, umgibt die Spitzen der Laufschaufeln jedes Laufschaufelkranzes, um das Lecken von Arbeitsgase über den Spitzen der Laufschaufeln zu reduzieren. Jede äußere Luftdichtung wird herkömmlicherweise aus mehreren Dichtungssegmenten aufgebaut, die am Ende um das Triebwerk herum angeordnet sind. Die den Spitzen gegenüberliegenden Flächen der Segmente werden jeweils üblicherweise aus einem abschleifbaren Material hergestellt, das eng tolerierte Anfangsbedingungen ohne zerstörerische Berührung mit den Laufschaufelspitzen bei Übergangszuständen ermöglicht. Trotz bereits verfügbarer Materialien und Konstruktionen für äußere Luftdichtungen werden unentwegt nach besseren abschleifbaren Materialkonstruktionen sowie Materialien gesucht, die eine ausreichende Dauerhaftigkeit in aggressiven Umgebungen haben, insbesondere innerhalb der Turbinenstufen von Gasturbinen in denen Dichtungsmaterialien örtlichen Temperaturen ausgesetzt sind, die um 1.200°C liegen, ist die Auswahl von Materialien und Gebilden die eine ausreichende Dauerhaftigkeit besitzen, sehr begrenzt. Häufig zu diesen Zwecken eingesetzte Materialien sind keramische Werkstoffe, die jedoch verglichen zu den metallischen Oberflächen beispielsweise einer Gasturbinenlaufschaufel über unterschiedliche thermische Ausdehnungseigenschaften verfügen, wodurch eine feste Verfügung zwischen den keramischen, abreibbaren Werkstoffen und einer metallischen Oberfläche beispielsweise an der Laufschaufelspitze technische Probleme aufwerfen.

Unter Berücksichtigung des Problems der unterschiedlichen thermischen Ausdehnungseigenschaften sind eine Reihe unterschiedlicher Verbindungstechniken zwischen hochtemperaturbeständigen Keramikmaterialien bekannt.

So werden in an sich bekannter Weise sogenannte klassische Honigwabenstrukturen, die aus entsprechend verformten Dünnblechen , z.B. Hasteloy-X oder PM2000, bestehen, an die äußere Spitze einer Gasturbinenschaufel mittels Schweiß- bzw. Löttechnik gefügt und mit geeignetem hochtemperaturbeständigen Material, vorzugsweise des Typs NiAl oder NiCrAI verfüllt. Derartige Honigwabenstrukturen, die im Streiffall zwischen der Gasturbinenschaufel und dem feststehenden Gehäuseelement abgetragen werden und auf diese Weise zu einem Minimalspiel zwischen rotierenden und feststehenden Bauteilen verhelfen, weisen jedoch den Nachteil auf, dass sie nicht über die gewünschte Temperaturbeständigkeit verfügen, insbesondere stellen die erforderlichen Schweiß- bzw. Lötverbindungen keine zuverlässige dauerhafte Verbindungen aufgrund der vorherrschenden hohen Betriebstemperaturen dar oder diese Dünnbleche sind für sich nicht oxidationsbeständig genug.

Ferner ist man seit vielen Jahren bemüht, hochtemperaturbeständige keramische Werkstoffe im Wege des thermischen Flammauftragspritzens mit entsprechenden Metalloberflächen in Verbindung zu bringen. Beispielsweise geht aus der DE 30 15 867 C2, auf die im übrigen bezüglich des darin ausführlich gewürdigten Standes der Technik verwiesen wird, ein Verfahren zum Herstellen eines Gegenstandes, vorzugsweise eine Gasturbinenschaufel aus einem Metall-Keramik-Verbund hervor. Hierbei weist die mit der hochtemperaturbeständigen Keramik zu beschichtende Metalloberfläche ein metallisches, poröses Polster auf, das zur weiteren Verbindung mit einem Material des MCrAIY-Typs imprägniert, d.h. überzogen bzw. beschichtet wird. Auf das derart präparierte poröse metallische Polster wird anschließend das hochtemperaturbeständige Keramikmaterial im Wege einer Plasma-Sprühbeschichtung aufgebracht.

In der EP 0 965 730 ist ein mit einem Keramiküberzug versehenes Bauteil, das den Dichtspalt mit einer Gasturbinenschaufelspitze eingrenzt, beschrieben. Hierbei weist das mit einer hochtemperaturfesten Keramikschicht beschichtete Bauteil eine Sandwich-Schichtstruktur auf, dessen unmittelbar mit dem Bauteil verbundene Zwischenschicht aus MCrAIY-Material besteht.

Allen bisher bekannten Verfahrenstechniken zur Herstellung abreibbarer, hochtemperaturbeständiger Schichten bzw. Schichtstrukturen, die zur Reduzierung des Dichtspaltes zwischen den feststehenden und rotierenden Komponenten einer Gasturbinenanlage vorgesehen sind, haftet jedoch der Nachteil an, dass die damit hergestellten Schichtüberzüge allesamt über eine stark verbesserungsbedürftige Haftfestigkeit sowie Oxidationsfestigkeit aufweisen, eingedenk der überaus hohen Temperaturen von bis zu 1200°C, denen sie ausgesetzt sind. Auch weisen die im Einsatz befindlichen keramischen Werkstoffe eine nur geringe Abreibbarkeit, die sogenannte "abradability", auf, wodurch hohe mechanische Kräfte während des Einlaufvorganges zwischen den feststehenden und rotierenden Gasturbinenbauteilen entstehen, durch die die Gesamtanordnung mechanisch stark in Anspruch genommen wird.

### Darstellung der Erfindung

Es besteht daher die Aufgabe, die vorstehend zum Stand der Technik genannten Nachteile zu vermeiden und insbesondere eine abreibbare Schicht zwischen feststehenden und rotierenden Komponenten einer Gasturbinenanlage anzugeben, die einerseits über eine hohe Temperaturbeständigkeit bzw. Oxidationsfestigkeit verfügt und überdies eine dauerhafte und zuverlässige Verbindung zur metallischen Substratoberfläche der jeweiligen Komponenten eingeht. Schließlich soll die Schicht über verbesserte Abreibeigenschaften verfügen, so dass während des Einlaufvorganges einer Gasturbinenanlage keine die Anlage zu stark belastenden Abriebkräfte zwischen den feststehenden und rotierenden Komponenten entstehen. Neben dem hochtemperaturbeständigen Schutzüberzug, der auf die metallische Substratoberfläche einer Gasturbinenkomponente aufzubringen ist, gilt es überdies ein entsprechendes Verfahren zur Herstellung eben jener Schicht anzugeben.

Die Lösung der der Erfindung zugrundeliegenden Aufgabe ist im Anspruch 1 angegeben, der einen erfindungsgemäß ausgebildeten hochtemperaturbeständigen Schutzüberzug zum Gegenstand hat. Die Ansprüche 15 und 16 sehen die bevorzugte Verwendung des Schutzüberzuges vor. Schließlich beschreibt Anspruch 17 ein erfindungsgemäßes Verfahren zur Herstellung des Schutzüberzuges. Den Erfindungsgedanken vorteilhaft weiterbildende Merkmale sind Gegenstand der Unteransprüche sowie der Beschreibung unter Bezugnahme auf die Ausführungsbeispiele zu entnehmen.

In Abkehr von den bisher bekannten Verfahrenstechniken zum Aufbringen von Keramikschichten als Abreibschichten wird erfindungsgemäß vorgeschlagen, als abreibbares Schichtmaterial MCrAIY-Material direkt zu verwenden, das als dicke Schicht auf eine metallische Substratoberfläche abgeschieden wird. Um sicherzustellen, dass die MCrAIY-Schicht mit der metallischen Substratoberfläche eine dauerhaft feste innige Fügeverbindung eingeht, weist diese unmittelbar auf der Substratoberfläche oder mittelbar durch wenigstens eine Zwischenschicht von der Substratoberfläche getrennt, flächig verteilt eine Vielzahl lokaler Erhebungen, sogenannte Rivets auf, die mit der Substratoberfläche oder der Zwischenschicht fest verfügt sind. Die als Rivets bezeichneten lokalen Erhebungen sind vorzugsweise pilzförmig oder stegartig ausgebildet und mit der Substratoberfläche bzw. der Zwischenschicht über eine metallurgische Stoffverbindung, die beispielsweise im Wege einer Löt- oder Schweißverbindung hergestellt werden kann, verbunden. Auch können die Rivets als längs zur Substratoberfläche verlaufende Drähte ausgebildet sein, die vorzugsweise parallel zueinander verlaufend auf der Substratoberfläche bzw. auf der Zwischenschicht angeordnet sind.

Unmittelbar auf der Substratoberfläche bzw. auf der Zwischenschicht sowie auf und zwischen den darauf befindlichen Rivets ist eine aus MCrAIY bestehende Materialschicht derart abgeschieden, dass die MCrAIY-Schicht die Substratoberfläche bzw. Zwischenschicht vollständig abdeckt, sowie die Rivets vollständig umgibt, die Bereiche zwischen den benachbarten Rivets vollständig ausfüllt sowie die Rivets überragt. Gemessen von der Substratoberfläche bzw. Zwischenschicht weist die MCrAIY-Schicht eine Schichtdicke bis zu 20 mm auf und bildet eine weitgehend homogen ausgebildete ebene Oberfläche aus. Da die Strukturhöhe der einzelnen Rivets wenige Millimeter entspricht, d.h. 1 bis 5 mm, werden die Rivets mit einer bis zu 15 mm freier Abreibdicke aufweisende MCrAlY-Schicht überragt.

Durch Vorsehen von Rivets, die als Befestigungsstrukturen für die darauf abgeschiedene MCrAIY-Schicht dienen, ist eine innige Verbindung zwischen der MCrAIY-Schicht und der Substratoberfläche gewährleistet, die den kritischen Betriebsbedingungen innerhalb einer Gasturbine standhält.

Um die Qualität der Verbindung zwischen der MCrAIY-Schicht und der metallischen Substratoberfläche insbesondere in Hinblick auf Hochtemperaturbelastbarkeit sowie Oxidationsbeständigkeit zu verbessern, wird vorzugsweise unmittelbar auf der metallischen Substratoberfläche eine oxidationsbeständige Schutzschicht, beispielsweise in Form einer hochverdichteten MCrAIY-Schicht aufgebracht. Unmittelbar darauf kann eine keramische TBC-Schicht abgeschieden werden, die die Temperaturbelastung des Bauteiles bzw. des Substrates deutlich zu verringern vermag. Auf der TBC-Schicht wird nachfolgend die weitere MCrAIY-Schicht in der vorstehend beschriebenen Weise abgeschieden.

Die einzelnen Rivets, die vorzugsweise ebenfalls aus verdichtetem bzw. hochverdichtetem MCrAIY-Draht bestehen, sind mit der metallischen Substratoberfläche oder einer darauf befindlichen Zwischenschicht mittels einer Schweiß- oder Lötverbindung verfügt.

Die auf der Substratoberfläche bzw. auf der Zwischenschicht sowie den Rivets abgeschiedene MCrAIY-Schicht wird typischerweise im Rahmen eines thermischen Flammspritzverfahrens hergestellt, bei dem die Kompaktheit bzw. Dichte des abgeschiedenen Schichtmaterials durch die Wahl der Abscheideparameter, wie Spritzgeschwindigkeit, Auftragstemperatur und der damit verbundene Erweichungsgrad der einzelnen erhitzten MCrAIY-Partikel, um nur einige zu nennen, individuell eingestellt werden kann. So ist es möglich, die MCrAIY-Schicht mit einer homogen über die Schichtdicke verteilten Dichte bzw. Porosität abzuscheiden, wobei darauf zu achten ist, dass die Porosität einen gewünschten Materialabrieb erlaubt, der sich durch Berühren von Schaufelspitze und feststehendem Gehäuseteil beim Einlaufvorgang einer Gasturbinenanlage ergibt.

Alternativ können die Abscheideparameter bei der Herstellung der MCrAIY-Schicht auch derart gewählt werden, dass die der Substratoberfläche bzw. Zwischenschicht nächstliegende Schichtbereiche der MCrAIY-Schicht eine höhere Dichte und somit geringere Porosität aufweisen als Bereiche der MCrAIY-Schicht nahe ihrer Oberfläche.

Schließlich gestattet der erfindungsgemäß ausgebildete hochtemperaturbeständige Schutzüberzug auch das Vorsehen einer direkten Kühlluftzufuhr von Seiten der metallischen Substratoberfläche, in der entsprechende Kühlkanäle eingearbeitet sind, die an dieser münden. Durch das grundsätzlich porös ausgebildete Strukturgefüge der MCrAIY-Schicht kann sich die von Seiten der metallischen Substratoberfläche austretende Kühlluft innerhalb des MCrAIY-Geflechtes ausbreiten und zu einer effektiven Kühlung der MCrAIY-Schicht sowie den mit der metallischen Substratoberfläche eingehenden Fügeverbindungen, bspw. mit den Rivets, beitragen.

Zur Herstellung des erfindungsgemäßen Schutzüberzuges sind in einem ersten Schritt die Rivets unmittelbar auf der Substratoberfläche oder, nach vorhergehender Abscheidung einer Zwischenschicht auf der Substratoberfläche, auf der Zwischenschicht fest zu verfügen. Die Verfügung der vorzugsweise aus MCrAIY-Material bestehenden Rivets erfolgt vorzugsweise mittels Schweiß- bzw. Löttechnik. In einem nachfolgenden Schritt wird MCrAIY-Material solange auf der Substratoberfläche bzw. auf der Zwischenschicht sowie auf den Rivets abgeschieden, bis die Rivets vollständig von MCrAIY-Material umgeben sind, Bereiche zwischen benachbarten Rivets vollständig vom MCrAIY-Material ausgefüllt und die Rivets vom MCrAIY-Material überragt werden. Die MCrAIY-Materialabscheidung erfolgt insbesondere derart, dass der sich ausbildende Oberflächenbereich der MCrAIY-Materialschicht porös und somit abreibbar ist. Da wie bereits vorstehend erwähnt, die MCrAIY-Materialabscheidung mittels thermischem Flammspritzen erfolgt, kann die Gefügestruktur der sich ausbildenden MCrAIY-Schicht hinsichtlich Porosität bzw. Dichte individuell eingestellt werden. Vorzugsweise werden die Abscheideparameter derart eingestellt, dass das unmittelbar an der Substratoberfläche bzw. Zwischenschicht sowie an den Rivets abgeschiedene Material eine hohe Materialdichte aufweist und dass die Materialdichte mit zunehmendem Abstand zur Substratoberfläche bzw. Zwischenschicht graduell oder stufenweise abnimmt, um auf diese Weise eine hohe Porosität und ein gutes Abreibverhalten zu erzielen.

Ein derartig hergestellter, hochtemperaturbeständiger Schutzüberzug, bestehend im wesentlichen aus einer MCrAIY-Schicht eignet sich besonders bevorzugt als Schichtüberzug an jenen feststehenden Gehäusebauteilen innerhalb einer Gasturbinenanlage, gegenüber denen die Schaufelspitzen der Verdichtereinheit bzw. der Gasturbinenstufe anfänglich in schleifendem Eingriff stehen. Durch das poröse Materialgefüge der MCrAIY-Schicht vermögen die Schaufelspitzen in Abhängigkeit ihrer thermischen Längung Teilbereiche der MCrAIY-Schicht abzutragen und auf diese Weise einen minimalen Dichtspalt zwischen den stehenden und rotierenden Bauteilen zu erzeugen.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematisierte Querschnittsdarstellung durch eine Substratoberfläche mit einer darauf abgeschiedenen hochtemperaturbeständigen Schutzschicht,
- Fig. 2a bis e: Gefügedarstellungen einer im Wege des Flammspritzverfahrens abgeschiedenen MCrAIY-Schicht mit unterschiedlicher Porosität,
- Fig. 3: Substratoberfläche mit darüber abgeschiedener hochtemperaturbeständiger Schutzschicht mit heterogener Porosität, sowie
- Fig. 4: Substratoberfläche mit hochtemperaturbeständigem Schutzüberzug mit Zwischenschichten.

### Wege zur Ausführung der Erfindung, gewerbliche Verwendbarkeit

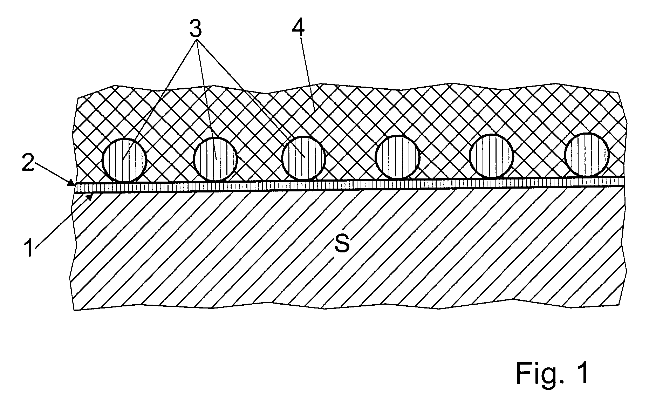

Fig. 1 zeigt einen Querschnitt durch ein Substrat S mit einer Substratoberfläche 1, auf der eine aus MCrAIY bestehende Zwischenschicht 2 abgeschieden ist. Das aus Metall bestehende Substrat S stellt beispielsweise ein Hitzeschild dar, das am feststehenden Gasturbinengehäuse angebracht ist und dessen Substratoberfläche 1 dem Gehäuseinneren zugewandt ist.
Die vorzugsweise aus MCrAIY bestehende Zwischenschicht 2 weist eine hohe Dichte auf, die durch geeignete Wahl der den Abscheideprozess zur Herstellung der Zwischenschicht 2 bestimmenden Abscheideparameter erhalten wird.

Die im gezeigten Ausführungsbeispiel gemäß Fig. 1 dargestellten Rivets 3 sind als parallel zueinander auf der Zwischenschicht 2 angeordnete Drähte ausgebildet, mit jeweils einem kreisrunden Drahtquerschnitt. Die drahtförmigen Rivets 3 sind mit der Zwischenschicht 2 mittels Schweiß- oder Lötverbindung fest verfügt.

Die auf der Oberfläche der Zwischenschicht 2 abgeschiedene und die Rivets vollständig umgebende Schicht 4 aus MCrAIY-Material (M steht für Ni, Fe oder CO) wird vorzugsweise mittels thermischen Flammspritzen erzeugt.
Die Schichtdicke der MCrAIY-Schicht 4 beträgt typischerweise bis zu 20 mm und überragt dabei in ihrer Mächtigkeit die Strukturhöhe der Rivets 3 deutlich. Die MCrAIY-Schicht 4 weist im Gegensatz zu der ebenfalls aus MCrAlY-Material bestehenden Zwischenschicht 2 eine weitaus geringere Dichte auf und verfügt somit über eine Porosität, die einem gewünschten Abreibverhalten entspricht.

Bei Verwendung der in Fig. 1 dargestellten MCrAIY-Schicht 4 innerhalb einer Gasturbine vermag eine, der MCrAlY-Schicht 4 gegenüberliegend angeordnete Laufschaufelspitze bei streifendem Eingriff diese lokal abzutragen, wodurch sich ein minimaler Dichtspalt zwischen der Oberfläche der MCrAIY-Schicht 4 und einer nicht dargestellten Laufschaufelspitze ausbildet.

Das bei der Herstellung der MCrAIY-Schicht 4 verwendete Flammspritzverfahren sieht vor, dass ein in Pulverform vorliegendes MCrAIY-Material bis überhalb der Erweichungstemperatur von MCrAIY erhitzt wird und mittels eines heissen, gasförmigen Trägerstromes mit hoher Geschwindigkeit auf eine zu beschichtende Substratoberfläche gerichtet wird, an der die erweichten bzw. verflüssigten MCrAIY-Tropfen aufschlagen, die Oberfläche benetzen und anschließend zu einem festen Schichtüberzug erstarren.

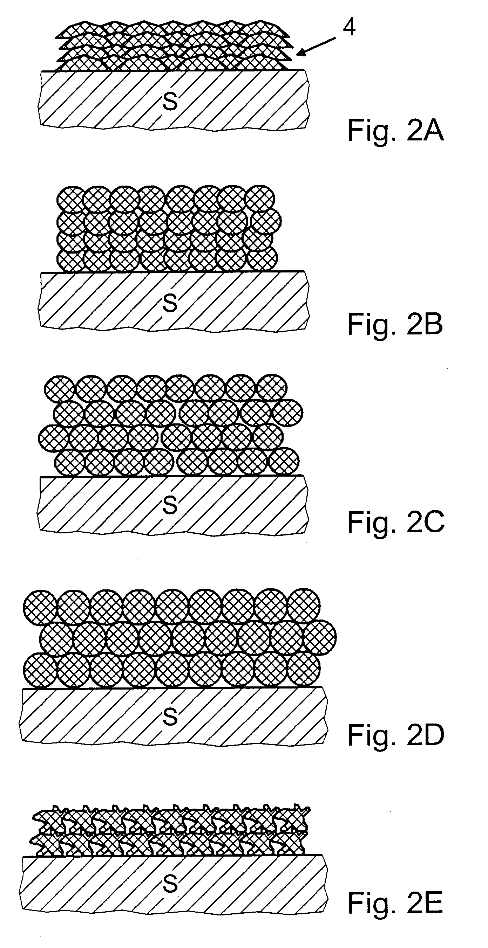

In Abhängigkeit der für den Beschichtungsprozess bestimmenden Spritzparameter können unterschiedliche Beschichtungsstrukturen in der sich ausbildenden MCrAIY-Schicht eingestellt werden. Arbeitet man beispielsweise mit vollständig verflüssigten MCrAlY-Pulverpartikeln und richtet die dabei entstehenden Tropfen mit einer sehr hohen Auftragsgeschwindigkeit auf die zu beschichtende Substratoberfläche, so wird als Schichtresultat eine sehr kompakte und dichte MCrAIY-Schicht 4, wie sie in der Querschnittsdarstellung gemäß Fig. 2a gezeigt ist, erhalten. Wird die Auftragsgeschwindigkeit sowie der Erweichungsgrad der einzelnen MCrAIY-Partikel verringert, so ergeben sich Schichten mit zunehmender Porosität, wie sie den Fig. 2b und 2c zu entnehmen sind. Werden hingegen die in Pulverform vorliegenden MCrAIY-Partikel voroxidiert und anschließend dem Flammspritzverfahren unterzogen, so kann die Haftung der einzelnen Partikel nach dem Auftragsprozess weiter verringert und die Porosität der sich ausbildenden Schicht gemäß Fig. 2d vergrößert werden. Auch ist es möglich, die Schichtstruktur durch eine geänderte Spritzpulverform des MCrAIY-Materials gemäß der Querschnittsdarstellung der Fig. 2e zu modifizieren.

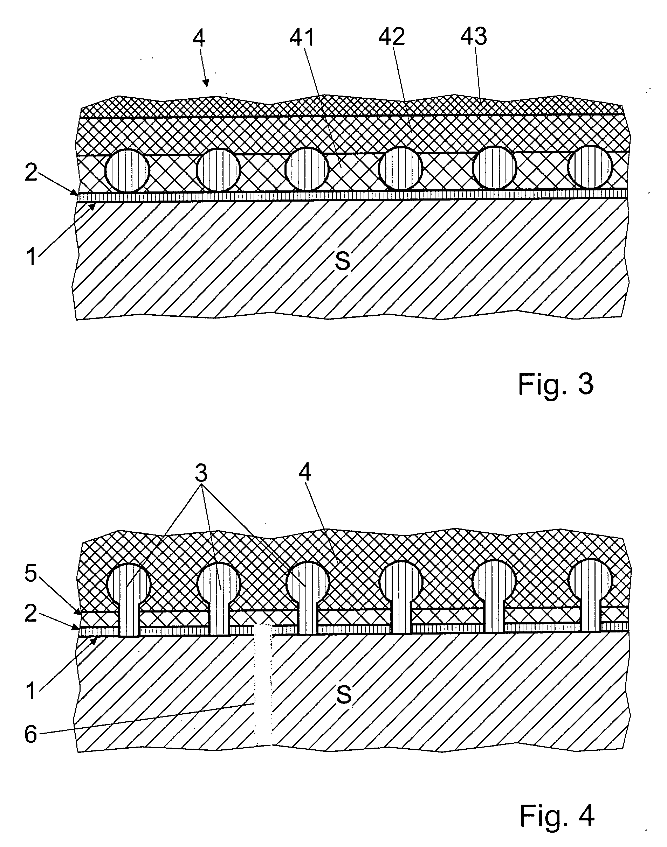

In Anbetracht vorstehender individuell einstellbarer Schichtstrukturen lassen sich MCrAIY-Schichten mit unterschiedlichen Porositäten herstellen. Fig. 3 zeigt hierzu einen Querschnitt durch eine mit unterschiedlichen Abscheideparameter hergestellten MCrAIY-Schicht 4, die drei Bereiche 41, 42 und 43 mit jeweils unterschiedlicher Dichte und somit Porosität aufweist. Die Porosität der der metallischen Substratoberfläche 1 am nächsten liegenden Schicht 41 weist hierbei die größte Dichte auf, die Schicht 43 die geringste und somit die geringste Dichte und somit höchste Porosität. Alternativ zu der in Fig. 3 dargestellten stufenweisen Einstellung der Schichtdicken ist es auch möglich, einen graduellen Dichteverlauf innerhalb der MCrAIY-Schicht 4 auszubilden.

Fig. 4 zeigt einen Querschnitt durch ein Substrat S mit einer metallischen Substratoberfläche 1, auf der eine Zwischenschicht 2, bestehend aus hochverdichtetem MCrAIY-Material, abgeschieden ist. Die die Zwischenschicht 2 durchragenden Rivets 3 sind als pilzförmige Elemente ausgebildet und gleichmäßig verteilt auf der metallischen Substratoberfläche angeordnet. In einer realisierten Ausführungsform weisen die Rivets einen größten Durchmesser von 1,4 mm auf und sind in einem lichten gegenseitigen Abstand von ca. 3 mm auf der metallischen Substratoberfläche 1 angeordnet. Aus Gründen einer verbesserten Hitzebeständigkeit ist auf der Zwischenschicht 2 eine keramische hochtemperaturbeständige Schicht 5 abgeschieden, eine sogenannte TBC-Schicht (thermal barrier coating). Auf der TBC-Schicht 5 ist die MCrAIY-Schicht 4 mit geeignet eingestellter Porosität abgeschieden. Zu Kühlzwecken dient der wenigstens eine Kühlkanal 6, der von Seiten des Substrates S die Zwischenschicht 2 durchdringt und in den porösen Bereich der TBC-Schicht 5 und der darüber befindlichen MCrAlY-Schicht 4 mündet.

### Bezugszeichenliste

- 1: Metallische Substratoberfläche
- 2: Zwischenschicht
- 3: Rivets
- 4: MCrAIY-Schicht
- 5: TBC-Schicht
- 6: Kühlkanal

## Patentansprüche

1. Hochtemperaturbeständiger Schutzüberzug über eine metallische Substratoberfläche (1), der wenigstens eine Materialschicht (4) bestehend aus MCrAIY aufweist, wobei M wenigstens eines der Elemente aus einer aus Fe, Co und Ni bestehenden Stoffgruppe ist,
**dadurch gekennzeichnet, dass** unmittelbar auf der Substratoberfläche (1) oder mittelbar durch wenigstens eine Zwischenschicht (2) von der Substratoberfläche (1) getrennt auf dieser flächig verteilt eine Vielzahl lokaler Erhebungen, sogenannte Rivets (3), vorgesehen sind, die mit der Substratoberfläche (1) oder der Zwischenschicht (2) fest verfügt sind,
dass wenigstens eine Materialschicht (4) bestehend aus MCrAIY auf der Substratoberfläche (1) bzw. Zwischenschicht (2) derart abgeschieden ist, das die Materialschicht (4) bestehend aus MCrAIY die Rivets (3) vollständig umgibt, Bereiche zwischen benachbarten Rivets (3) vollständig ausfüllt und die Rivets (3) überragt.

2. Schutzüberzug nach Anspruch 1,
**dadurch gekennzeichnet, dass** die Materialschicht (4) bestehend aus MCrAIY eine Schichtoberfläche aufweist, die eine porös abreibbare Konsistenz aufweist.

3. Schutzüberzug nach Anspruch 1 oder 2,
**dadurch gekennzeichnet, dass** die Rivets (3) stegartig oder pilzförmig ausgebildet sind und mit der Substratoberfläche (1) bzw. der Zwischenschicht (2) über eine metallurgische Stoffverbindung verbunden sind.

4. Schutzüberzug nach Anspruch 1 oder 2,
**dadurch gekennzeichnet, dass** die Rivets (3) als Drähte ausgebildet sind und mit der Substratoberfläche (1) oder auf der Zwischenschicht (2) fest verfügt sind.

5. Schutzüberzug nach einem der Ansprüche 1 bis 4,
**dadurch gekennzeichnet, dass** die Rivets (3) eine von der Substratoberfläche (1) bzw. Zwischenschicht (2) ausgehende Strukturhöhe im Millimeterbereich aufweisen.

6. Schutzüberzug nach einem der Ansprüche 1 bis 5,
**dadurch gekennzeichnet, dass** zwei benachbarte Rivets (3) einen lichten Abstand im Millimeterbereich bishin zu wenigen Zentimetern aufweisen.

7. Schutzüberzug nach einem der Ansprüche 1 bis 6,
**dadurch gekennzeichnet, dass** die Rivets (3) aus MCrAIY-Material bestehen, insbesondere aus SV 20 oder SV 34, und über eine hohe Materialfestigkeit verfügen.

8. Schutzüberzug nach einem der Ansprüche 1 bis 7,
**dadurch gekennzeichnet, dass** die Zwischenschicht (2) eine Oxidationsschutzschicht ist.

9. Schutzüberzug nach Anspruch 8,
**dadurch gekennzeichnet, dass** die Zwischenschicht (2) aus MCrAIY-Material hoher Festigkeit, insbesondere aus SV 20 oder SV 34, besteht.

10. Schutzüberzug nach einem der Ansprüche 1 bis 9,
**dadurch gekennzeichnet, dass** die Zwischenschicht (2) zwei Schichtlagen aufweist, eine erste bestehend aus MCrAIY-Material hoher Festigkeit, insbesondere aus SV 20 oder SV 34, und eine zweite bestehend aus einer wärmedämmenden Keramikschicht (5), einer sogenannten TBC-Schicht.

11. Schutzüberzug nach einem der Ansprüche 1 bis 10,
**dadurch gekennzeichnet, dass** die Materialschicht (4) bestehend aus MCrAIY eine homogene poröse Schichtstruktur aufweist.

12. Schutzüberzug nach einem der Ansprüche 1 bis 10,
**dadurch gekennzeichnet, dass** die Materialschicht (4) bestehend aus MCrAIY eine Materialschichtung aufweist, deren der Substratoberfläche (1) bzw. der Zwischenschicht (2) nächstliegenden Schichtbereiche (41) eine höhere Materialdichte aufweist als jene Schichtbereiche, die von der Substratoberfläche (1) bzw. der Zwischenschicht (2) weiter entfernt liegen, und dass der Schichtbereich (43) an der Oberfläche der Materialschicht (4) bestehend aus MCrAIY über die geringste Materialdichte bzw. die größte Porosität verfügt.

13. Schutzüberzug nach Anspruch 12,
**dadurch gekennzeichnet, dass** sich die Materialdichte innerhalb der Materialschichtung graduell oder stufenweise ändert.

14. Schutzüberzug nach einem der Ansprüche 1 bis 13,
**dadurch gekennzeichnet, dass** Kühlkanäle (6) vorgesehen sind, die die Substratoberfläche (1) bzw. und die Zwischenschicht (2) durchragen und in Richtung der Materialschicht (4) bestehend aus MCrAIY geöffnet sind.

15. Verwendung des Schutzüberzug als hochtemperaturbeständiges Abreibelement zwischen einem rotierendem Schaufelende in einer axialdurchströmten Strömungsmaschine und einem feststehenden Teil zur Reduzierung eines sich zwischen dem rotierendem Schaufelende und dem feststehenden Teil ergebenden Dichtspaltes.

16. Verwendung nach Anspruch 15,
**dadurch gekennzeichnet, dass** der als Abreibelement dienende Schutzüberzug an dem als Substratoberfläche dienende Heatshield (stehendes Gehäuse) angebracht ist.

17. Verwendung nach Anspruch 15,
**dadurch gekennzeichnet, dass** der als Abreibelement dienende Schutzüberzug an dem als Substratoberfläche dienenden Rotor (drehendes Teil) angebracht ist.

18. Verfahren zur Herstellung eines Schutzüberzuges nach einem der Ansprüche 1 bis 14,
**dadurch gekennzeichnet, dass** Rivets (3) unmittelbar auf der Substratoberfläche (1) oder nach vorheriger Abscheidung einer Zwischenschicht (2) auf der Substratoberfläche (1) auf der Zwischenschicht (2) fest verfügt werden,
dass im Wege eines Abscheidevorganges MCrAIY-Material solange auf der Substratoberfläche (1) bzw. Zwischenschicht (2) sowie auf den Rivets (3) abgeschieden wird bis die Rivets (3) vollständig von dem MCrAIY-Material (4) umgeben sind, Bereiche zwischen benachbarten Rivets (3) vollständig von MCrAlY-Material (4) ausgefüllt und die Rivets (3) von MCrAIY-Material (4) überragt werden, und
dass das MCrAIY-Material (4) derart abgeschieden wird, dass zumindest ein sich bildender Oberflächenbereich der Materialschicht (4) bestehend aus MCrAIY porös ist.

19. Verfahren nach Anspruch 18,
**dadurch gekennzeichnet, dass** der Abscheidevorgang des MCrAIY-Materials mittels thermischen Flammspritzen durchgeführt wird.

20. Verfahren nach Anspruch 19,
**dadurch gekennzeichnet, dass** die das Flammspritzen bestimmenden Abscheideparameter derart eingestellt werden, dass die sich ausbildende Materialschicht (4) bestehend aus MCrAIY über eine ihre Materialdicke homogene oder heterogene Porosität verfügt.

21. Verfahren nach Anspruch 19,
**dadurch gekennzeichnet, dass** die das Flammspritzen bestimmenden Abscheideparameter derart eingestellt werden, dass das unmittelbar an der Substratoberfläche (1) bzw. Zwischenschicht (2) sowie an den Rivets (3) abgeschiedene Material eine hohe Materialdichte aufweist und dass die Materialdichte mit zunehmenden Abstand zur Substratoberfläche (1) bzw. Zwischenschicht (2) graduell oder stufenweise abnimmt.
